# EUROPEAN PATENT APPLICATION

(11) **EP 4 744 865 A1**
(43) Date of publication of application: **20.05.2026**
(21) Application number: 24214028.3
(22) Date of filing: 19.11.2024
(51) Int. Cl.: B29C 64/118, B29C 64/209, B29C 64/232, B29C 64/255, B29C 64/314, B33Y 10/00, B33Y 30/00, B33Y 40/10

(54) **METHOD AND SYSTEM FOR INTEGRATED COMPRESSION AND EXTRUSION PRINTING**

(71) Applicant: Nederlandse Organisatie voor toegepast- natuurwetenschappelijk onderzoek TNO, 2595 DA 's-Gravenhage (NL)
(72) Inventor: HOPPENBROUWERS, Marcus Benedictus, 2595 DA s-Gravenhage (NL); VAN EE, Renz Jeroen, 2595 DA s-Gravenhage (NL)
(74) Representative: V.O.

(57) **Abstract**

The invention relates to a method and system for extrusion printing. A powder formulation is provided consisting of one or more components into a chamber (3) equipped with a piston (7). The powder formulation is compressed within the chamber using the piston to form a compressed block of material, wherein the piston is configured with an outer diameter smaller than the inner diameter of the chamber, such as to establish a gap (G) that is configured to permit air to escape while preventing the material from exiting therethrough during compression. The compressed block of material is extruded through a nozzle (9) to achieve extrusion printing.

## Description

### FIELD OF THE INVENTION

The invention relates to a method for extrusion printing. The invention also relates to a system configured to perform extrusion printing. The invention addresses the process of preparing and utilizing powder formulations for the creation of objects through extrusion printing techniques. Additionally, the invention relates to semi-solid extrusion.

### BACKGROUND TO THE INVENTION

In the field of extrusion printing, there are several challenges and limitations associated with existing technologies that process powder formulations to create three-dimensional objects. Conventional methods often involve complex multi-step procedures that can compromise the efficiency, quality, and consistency of the printed products.

One of the primary issues in current 3D printing technologies is the difficulty in achieving uniform and air-free material compression from powder forms. The presence of air in the compressed material often leads to defects in the structural integrity and mechanical properties of the final product, which is especially problematic in precision-dependent applications such as pharmaceuticals and high-performance engineering components.

Furthermore, existing systems generally require complex mechanisms for the compression and extrusion phases, increasing the potential for material contamination during transfer between stages. This often necessitates additional handling and alignment steps, which not only slow down the manufacturing process but also introduce more points of failure and variability in the product quality.

Additionally, the equipment used in conventional powder-based 3D printing processes is often bulky and expensive, with a high requirement for maintenance. These systems also typically suffer from inefficiencies related to the need for manual interventions between steps, such as transferring the material from the compression chamber to the extrusion chamber. This not only increases the labor intensity of the process but also results in significant material waste and operational downtime.

Moreover, the lack of effective sealing mechanisms in many existing extrusion systems leads to difficulties in maintaining the required material properties during extrusion. Without adequate sealing, the material can leak or extrude prematurely, resulting in inconsistencies in the extruded product and a reduction in the precision of the extrusion process.

Lastly, the current technologies often operate under a one-size-fits-all approach, lacking the flexibility to adapt to different materials and process requirements. This inflexibility can hinder the adoption of powder-based 3D printing across various industries that require tailored solutions for different materials, such as food products, pharmaceuticals, and biodegradable materials, where the physical properties and handling requirements can vary widely.

These challenges underscore the need for an improved extrusion printing technology that addresses the issues of air entrapment, material handling, equipment complexity, and/or sealing efficacy, thereby enhancing the overall quality, efficiency, and/or adaptability of the 3D printing process.

### SUMMARY OF THE INVENTION

It is an object of the invention to provide for a method and a system that obviates at least one of the above-mentioned drawbacks.

Additionally or alternatively, it is an object of the invention to provide for an improved system and method for extrusion printing of a powder formulation material.

Additionally or alternatively, it is an object of the invention to enhance the uniformity of extruded products derived from powder-based formulations.

Additionally or alternatively, it is an object of the invention to streamline the production process for printed objects using powder-based formulations.

Additionally or alternatively, it is an object of the invention to improve the structural integrity and functional properties of objects created from powder-based formulations.

Thereto, the invention provides for a method for extrusion printing, comprising: providing a powder formulation consisting of one or more components into a chamber equipped with a piston; compressing the powder formulation within the chamber using the piston to form a compressed block of material, wherein the piston is configured with an outer diameter smaller than the inner diameter of the chamber, such as to establish a gap that is configured to permit air to escape while preventing the material from exiting therethrough during compression; extruding the compressed block of material through a nozzle to achieve extrusion printing.

An efficient formation of a uniform, air-free extrusion product is enabled. The piston is arranged with an outer diameter smaller than the inner diameter of the chamber, creating a gap that permits air to escape but prevents the powder material from exiting during compression. The gap enables the removal of air without loss of material in an effective way. This is important for maintaining the quality and uniformity of the extruded product, particularly important in applications such as pharmaceuticals where product consistency is of great importance.

The extrusion printing integrates three primary steps: providing a powder formulation to a chamber, compressing the powder into a dense block, and then extruding this block through a nozzle to form the final product. The powder can be composed of various materials and may include a blend of different powders to achieve specific properties in the final product. For pharmaceutical applications for instance, this can include a mix of an active pharmaceutical ingredient (API) and optionally one or more excipients that aid in processing and stabilize the drug. Once the powder is loaded, a piston with an outer diameter slightly smaller than the inner diameter of the chamber compresses the powder. The design of the gap between the piston and the chamber walls is important.

The gap can be configured such that it is small enough to prevent any significant amount of material from escaping during the compression process, yet large enough to allow air to be expelled. For example, if the gap is maintained in the range of 10 to 100 microns, it effectively allows air, which can be compressed to much smaller volumes, to escape, while keeping the powder, which consists of larger particles, contained within the chamber. Air entrapment within the powder can lead to defects in the final product, such as porosity or uneven material density, which are detrimental in products that require high structural integrity and uniformity like precision drug tablets, etc. The method of the invention allows to effectively prevent such detrimental effects.

Following compression, the now compacted and (substantially) air-free block of material is extruded through a nozzle. The design of the nozzle can vary based on the desired shape and size of the extruded product. The extrusion process involves pushing the compressed block through the nozzle using the piston, now acting as an extrusion plunger, which can be controlled to adjust the extrusion speed and pressure, thus affecting the final product's dimensions and surface finish.

The configuration of the piston and chamber gap is an effective mechanical solution to achieve high-quality extrusion printing. By allowing air to escape and preventing material loss during compression, the setup can enhance material density and uniformity, increase product reliability, reduce waste and/or simplify the manufacturing process.

The removal of air can ensure that the compressed block is highly dense and uniform, which translates to improved structural integrity and consistent properties in the extruded product.

For example, in applications like pharmaceuticals, consistent dosage and drug release profiles are important. The air-free compression can contribute to uniformity in drug tablets, important for ensuring each dose contains the correct amount of active ingredient.

For example, the design can minimize material waste during compression, which is economically beneficial and environmentally friendly, especially important in industries dealing with expensive or hazardous materials.

Optionally, the extrusion is a semi-solid extrusion. The powder formulation may be in a semi-solid state, implying that it is close to a phase transition, which makes it both easily extrudable but also quick to solidify after extrusion thus creating standup.

In some examples, this may involve a layer-wise three-dimensional printing where a defined stock formulation is extruded from a chamber which is located inside a print head.

Optionally, the chamber is a syringe chamber. The syringe chamber filled with the print material may be configured to extrude, via a nozzle, a well-defined, uniform and substantially air free material.

Optionally, the process of compressing the powder formulation into a compressed block of material and subsequent extrusion through the nozzle is performed using a same chamber.

By integrating the compression and extrusion processes into a single chamber system, the method can effectively reduce the complexity of the machinery and the number of steps involved in the production process, leading to faster throughput and lower production costs.

The processes of compressing the powder formulation and extruding it through a nozzle can be performed in the same chamber. Using a single chamber for both compression and extrusion can lead to a reduction in equipment cost and maintenance. Moreover, this arrangement enhances the continuity and efficiency of the production process by minimizing the handling of the material between stages, thus reducing contamination risks and material waste.

By using a single chamber, the need for duplicative components can be eliminated, which simplifies the design and reduces the footprint of the equipment. This can be particularly advantageous in environments where space is a constraint, such as in small manufacturing facilities or specialized laboratories.

When the entire process of forming and extruding the material is confined to one chamber, there are fewer moving parts and less mechanical wear. Maintenance can become more efficient. Additionally or alternatively, the continuity of the production process can be enhanced. In systems where material can be transferred between chambers, there is always a risk of contamination or loss of material during the transfer. Each transfer step is a potential failure point where variables such as air exposure, humidity, and human error can affect the quality and consistency of the product. The single-chamber method streamlines the process by eliminating these transfer steps, thus enhancing process reliability and reducing the risk of errors or contamination.

For example, in a pharmaceutical application where precision and contamination control are important, a dual-chamber system may expose the material to environmental variables or handling errors, compromising the sterility and integrity of the product, when transferring a compressed pharmaceutical powder from a compression chamber to an extrusion chamber. By using a single chamber, the powder can be compressed and directly extruded in a controlled environment, reducing the risk of contamination and ensuring that the dosage and formulation of the pharmaceutical product are precise.

Moreover, in rapid prototyping or small-batch production scenarios, the time saved by eliminating the transfer steps can significantly increase the throughput of the production process. This is because the material remains in a single chamber from start to finish, reducing cycle times and enabling faster iteration and production rates.

The single-chamber system minimizes material waste associated with transfers between multiple chambers. By using one chamber, nearly all material can be utilized, which is particularly important when dealing with expensive or limited-supply materials.

Optionally, a sealing is added, by means of a sealing unit, wherein the sealing unit is arranged to eliminate the gap through which air is allowed to escape during compression.

The transition from a compression environment, where air escape is necessary, to an extrusion environment, where a sealed (e.g. airtight) chamber is necessary, can be enabled. This sealing unit ensures that once air has been expelled from the chamber during compression, no semi-solid material escapes during the extrusion phase which often requires the application of lower forces for achieving the extrusion of material through the nozzle. As the material is softened as a result of heating (e.g. higher temperatures), a lower viscosity may be obtained, thus requiring lower forces for extrusion.

The sealing unit, typically integrated into or around the piston or chamber, may be configured to be deployable. During the initial stages of compression, it remains retracted or inactive, allowing a predetermined gap between the piston and the chamber walls. This gap can be important for the escape of air from the powder formulation as it is compressed. Without such a feature, air trapped within the compressed material can lead to imperfections such as porosity or uneven material density, which are detrimental in precision applications like pharmaceutical printing.

Once the compression phase is complete, and before or during the transition to extrusion, the sealing unit may be activated. This can involve mechanical expansion (e.g., an expandable O-ring or gasket), electromechanical movement (e.g., solenoids actuating a sealing ring into place), or hydraulic or pneumatic systems that push the sealing component against the chamber walls. The seal effectively closes the gap, ensuring that the now semi-solid material is contained within the chamber under a controlled environment, ready for extrusion.

By transitioning to a sealed (e.g. airtight) extrusion environment, the method can prevent the semi-solid material from escaping through any gaps. This can be important for maintaining the prescribed material quantity and consistency as it moves through the extrusion nozzle, directly influencing the dimensional accuracy and structural integrity of the printed product. This controlled environment also ensures that the material is extruded at a consistent rate and formulation, which is particularly important when printing complex structures or using materials with strict requirements (e.g. size, weight, etc.).

In the printing of pharmaceutical products, where dosage accuracy can be important, the sealing unit's ability to maintain a sealed environment ensures that no material escapes, thus preserving the exact dosage and uniformity of active ingredients within each extruded unit.

Similarly, in food extrusion, where air pockets within a compressed food product can lead to spoilage or uneven cooking, the sealing mechanism can ensure that the product remains dense and uniform in texture, important for maintaining quality and safety standards.

Optionally, the sealing unit is configured to be passively or actively adjustable. For example, passive adjustment may rely on inherent material properties or mechanical fit to achieve sealing. Active adjustment may involve actuation to alter the sealing state.

Optionally, the sealing unit is switchable between a first position, in which air is allowed to escape, and a second position, in which a sealing is obtained within the chamber, wherein the sealing unit is configured to be switched to the first position during at least a portion of the compression of the powder formulation, and to be switched to the second position during at least a portion of the extrusion of the compressed block of material through the nozzle.

The sealing unit may be capable of switching between allowing air to escape and creating a seal. The chamber environment/state can be controlled dynamically, accommodating different stages of the extrusion printing process. By enabling the piston to switch positions, the method allows for an operation where the chamber conditions can be optimized for both the air expulsion during compression and the maintenance of a sealed environment during extrusion, thus enhancing the product's dimensional accuracy and surface finish.

In some examples, the sealing unit in the piston is configured to transition between two positions, an open position where air is allowed to escape during the compression phase, and a sealed position where the chamber is sealed (e.g. converted into an airtight environment) necessary for the extrusion phase (cf. pressure requirements). This ensures that the semi-solid material is directed through the nozzle without leakage through the piston-chamber gap, thus maintaining precise control over material flow.

The switching mechanism can be actuated using various methods such as mechanical levers, hydraulic systems, and/or electro-mechanical actuators that respond to control signals.

In some examples, a mechanical lever may manually or automatically shift the sealing ring into place as the piston reaches a certain point in its stroke.

In some examples, an electro-mechanical actuator can be configured to adjust the sealing based on sensor feedback regarding chamber pressure and temperature, ensuring adequate timing for switching.

By maintaining a seal during extrusion, the piston can exert a consistent pressure on the material, which can be important for achieving uniform extrusion rates and material densities. This consistency can be important for printing applications requiring high precision, such as medical implants, intricate electronic components, etc.

The switchable seal can ensure that materials are extruded under improved or even optimal conditions to meet strict requirements and/or standards. The dual-stage functionality of the sealing unit facilitates a seamless transition between the compression and extrusion phases.

Optionally, the same piston is used for compression and extrusion.

Such integration simplifies the device architecture and reduces the potential for mechanical failures and maintenance, while also streamlining the transition between compression and extrusion phases.

By employing a single piston for the dual purposes of compression and extrusion, the system eliminates the need for multiple pistons or complex mechanisms to switch between different pistons or stages.

The use of the same piston for both processes allow for immediate transition from compression to extrusion without the need for mechanical reconfiguration or waiting for different system components to engage. This seamless transition can substantially reduce cycle times, thereby increasing the throughput of the manufacturing process. For example, in a production line for 3D printed pharmaceuticals, reducing the time between compression and extrusion can significantly increase the number of dosage forms produced per hour.

Optionally, the sealing unit is integrated within said same piston.

Such a configuration not only simplifies the mechanical design but also can improve the reliability and maintenance of the equipment.

The sealing unit can be located near the periphery of the piston. It can be a groove that houses an O-ring, or a series of gaskets configured to expand and contract under controlled conditions.

The sealing activation may be achieved by mechanical means, such as a cam or lever system that exerts pressure on the sealing element, or by hydraulic or pneumatic pressure channels within the piston that inflate the seal when required.

During the compression phase, the piston may move downward, compressing the powder. The seal is inactive (retracted) allowing air to escape through the gap between the piston and the chamber walls, ensuring that no air is trapped within the powder. When transitioning to the extrusion phase, the seal may be activated (expanded), for instance by mechanical pressure or fluid pressure, filling the gap and preventing the semi-solid material from leaking out during extrusion. This ensures that the material is directed solely towards the nozzle for precise deposition.

By integrating the seal within the piston, the need for separate sealing mechanisms or additional actuators external to the piston is eliminated. This reduces the complexity of the device assembly, simplifying manufacturing and assembly processes. Fewer components and joints mean there are fewer potential points of failure, which enhances the reliability of the system. Maintenance becomes less frequent and easier to perform, focusing mainly on the piston and its in-built components.

For example, in a pharmaceutical setting, where cross-contamination can be minimized, the integrated seal ensures that no external contaminants enter the system during the switch from compression to extrusion.

Optionally, the chamber is integrated within an extrusion print head to allow immediate subsequent extrusion of the formed compressed block of material.

Once the compression of the powder formulation into a billet is achieved within the chamber, the same chamber acts as the conduit for extrusion. This is facilitated by the piston moving or retracting to position the billet directly in alignment with the nozzle head. After compression, any required adjustments to the chamber conditions (such as temperature changes or sealing adjustments) can be rapidly implemented without physical transfer of the billet. This direct handoff between process steps minimizes time delays and potential handling errors.

Combining the chamber within the print head allows for more precise control over important parameters such as temperature and pressure during the transition from compression to extrusion. For materials sensitive to temperature fluctuations or those requiring precise environmental conditions, this can be important.

The ability to immediately extrude after compression ensures that the material properties remain consistent, without the risk of environmental exposure or temperature gradients affecting the quality of the compressed block of material (cf. billet).

The integrated system ensures that each billet is handled in precisely the same manner, reducing variability in the extrusion process and enhancing product consistency.

Optionally, the process of compressing the powder formulation into a compressed block of material and subsequent extrusion is done within a different chamber, wherein a first chamber is used during compression to form the compressed block of material, and wherein a second chamber receives said formed compressed block of material and is used for subsequent extrusion printing.

This can lead to improved processing conditions for each phase, enhancing the quality of the extruded product by maintaining optimal conditions tailored for compression and extrusion respectively.

In some examples, each chamber can maintain different temperatures suitable for its specific process. For instance, the compression chamber may be kept at a lower temperature to ensure that the powder does not prematurely melt or bind, preserving the integrity of the powder's physical characteristics and prevent air entrapment. Conversely, the extrusion chamber can be heated to a higher temperature that is ideal for achieving a semi-solid state of the material, facilitating easier extrusion through the nozzle (cf. requiring less force/pressure).

Separating the chambers allows for distinct pressure and temperature settings that are optimal for each process. The compression chamber may require higher pressure to compact the powder effectively into a dense, uniform block without trapped air, which can be important for maintaining the quality of the finished product. On the other hand, as the device can be operated at a higher temperature, which is not possible during compression because that would lead to air entrapment, the extrusion chamber may operate under lower pressures suitable for pushing the semi-solid material through the extrusion nozzle, reducing the risk of material degradation or mechanical stress that can result from too high pressure.

In the production of pharmaceuticals, where consistency and purity are important, having separate chambers can help in managing different environmental conditions such as humidity and sterility. For example, the compression chamber can be maintained in a dry, inert atmosphere to prevent any moisture uptake by hygroscopic materials, while the extrusion chamber may be controlled for aseptic conditions to ensure product sterility.

In food product extrusion, different chambers may be used to handle various ingredients that require different processing conditions. For instance, ingredients that are sensitive to heat such as probiotics can be compressed at lower temperatures and then mixed with other components in the extrusion chamber where higher temperatures may be used to achieve the desired texture and flow properties.

When creating composite materials, such as fiber-reinforced plastics, the fibers can be compressed at room temperature in one chamber to maintain their structural integrity and then mixed with a resin in the extrusion chamber, which may be heated to facilitate thorough mixing and impregnation of the resin into the fibers.

Optionally, a different piston is used for compression and extrusion, wherein during compression, a first piston is employed that is connected to a first actuation unit, and wherein during extrusion, a second piston is employed that is connected to a second actuation unit, different from the first actuation unit.

Advantageously, this can enable the application of appropriate forces and controls for each stage, leading to a more precise and efficient process.

The piston used for compression can be configured to exert higher forces necessary to compact the powder into a dense, air-free billet. This may involve a more robust and heavier piston capable of handling large mechanical loads. The actuation unit for this piston can be a hydraulic system, known for generating high forces and maintaining steady pressure, which is ideal for overcoming the resistance of compacting powder materials.

The piston for the extrusion process, on the other hand, requires precise control over movement rather than exerting high force. This piston can be lighter and equipped with a finer control mechanism. An appropriate actuation unit may be an electromechanical actuator, which provides precise control over piston speed and position.

In the compression stage, the focus is on uniformly compressing the powder to remove air pockets and achieve a consistent density throughout the billet. The actuation unit needs to deliver consistent and high force to ensure that the powder is sufficiently compacted. For example, a hydraulic press can be used, which can apply a force of e.g. several kilonewtons, as required to compress pharmaceutical powders into a coherent block.

During extrusion, the key requirement is not just force but the control of how the material is pushed through the nozzle. This stage benefits from a stepper motor, servo motor or any other source of force that can adjust the speed and position of the piston dynamically, responding to the feedback from sensors monitoring the flow rate and pressure of the material being extruded. This control may be important to maintain the correct flow and prevent defects in the printed structure.

By dedicating specific pistons and actuators to each task, the system can be made more efficient. There is no need for compromise on the design of a single piston or actuator to perform both tasks adequately. Each can be optimized for its specific function, reducing wear and tear, enhancing the longevity of the system, and decreasing downtime due to maintenance.

Different materials and product specifications may require adjustments in the compression and extrusion forces. Having dedicated systems for each phase allows for scalability and adaptation to different production volumes and materials. For instance, switching from a low-volume, high-precision pharmaceutical application to a high-volume food product line may only require changes to one of the systems, rather than a complete overhaul.

Optionally, only the second piston has a sealing unit configured to allow for sealed extrusion printing.

By equipping only the second piston with a sealing unit, the design directly addresses the important need for a sealed environment during extrusion.

During extrusion, the presence of the sealing unit on the second piston ensures that once the material is at the appropriate semi-solid state and the extrusion begins, no material leaks out except through the designated nozzle.

By using a sealing unit on the second piston, the system ensures that once the powdered material is compressed into a billet and heated to a semi-solid state, the transition to the extrusion phase is seamless and controlled, with no leakage of the material due to the seal provided by e.g. an O-ring or similar mechanism.

It will be appreciated that the sealing mechanism can be configured to accommodate different operational pressures and temperatures that are used in the extrusion of various materials. For example, if the material requires a higher temperature to reach a semi-solid state conducive to extrusion, the sealing unit can be made from materials that maintain their integrity and sealing properties under such conditions.

Optionally, the compressed block of material is formed directly within a container inserted into the first chamber during compression.

Optionally, the container is selected from the group consisting of a syringe and a cartridge.

Optionally, the container is disposable. For example, it can be made of plastic.

Optionally, the container is reusable. For example, it can be made of metal or any other suitable material.

Optionally, the first chamber comprises an upper part and a lower part, the lower part being configured to create a cavity that allows for a tight fit for the container and having a closed container outlet at the bottom.

Optionally, the lower part consists of multiple parts that can be locked together to facilitate removal of the container after filling.

Optionally, both the upper part and the lower part of the first chamber are designed to withstand pressures required for air-free compression of powders.

Optionally, the method further comprises inserting the container into the lower part of the first chamber; locking the upper part to the lower part; and adding the powder formulation into the chamber such that after compression, the container is completely filled with the compressed block of material.

Optionally, the inner diameter of the upper part of the first chamber is equal to the inner diameter of the container. This allows for seamless filling during compression.

Optionally, the method further comprises capping the container on both sides after compression. This allows for prolonged shelf life.

The capping may include sealing both the top and bottom openings of the container immediately after compression to prevent ingress of air or moisture. The capping may be performed using caps made of materials suitable therefor.

In some examples, the container may be designed with integrated sealing mechanisms that facilitate airtight capping on both ends.

In some examples, the capping may include attaching lids or plugs to both ends of the container to achieve a hermetic seal.

The capping is conducted under an inert atmosphere to further enhance the shelf life of the compressed material.

In some examples, the capped container is kept at controlled temperatures to prolong the shelf life of the compressed material.

The caps may be threaded and screwed onto the container ends to secure the compressed material within. It is also possible that the capping utilizes snap-fit mechanisms to quickly seal both ends of the container.

Optionally, the container is filled with air-free compressed material. This can avoid any air gap that may interfere with proper extrusion.

Optionally, the method further comprises transferring the container containing the compressed block of material to the second chamber for extrusion printing.

Optionally, the container is used directly in the second chamber for extrusion printing without removing the compressed block of material.

Optionally, the compressed block of material within the container is extruded through a nozzle attached to the container.

Optionally, the compressed block of material within the container is stored for later use in extrusion printing.

In some examples, the container is prepared in advance without the need for immediate use.

Optionally, the lower part of the first chamber has a closed container outlet at the bottom during compression, and the container outlet is opened after compression to facilitate removal of the container.

In some examples, using the container filled with compressed material avoids the need for an air gap that may interfere with proper extrusion.

Optionally, the sealing unit has an actively actuated sealing mechanism.

The active actuation allows for rapid adaptation to changes in material properties or operational conditions. The ability to actively control the sealing process enhances the reliability and flexibility of the printing process.

This active sealing capability allows the piston to dynamically adjust its sealing state during the extrusion printing process. An advantage of having an actively sealable piston, even when utilizing two separate chambers, is the flexibility it offers in accommodating billets (compressed blocks of material) of varying sizes that may not fully occupy the chamber's height. With an actively actuated sealing mechanism, the piston can progress downward unsealed until it reaches the billet, allowing any air above the billet to escape freely. Once the piston makes contact with the billet, the sealing mechanism can be actuated to create a seal, and the extrusion process can begin. If the piston were sealed from the start, a large air cushion would form above the billet, potentially compromising the printing process by causing pressure inconsistencies or air entrapment. Therefore, an actively actuated sealing mechanism enhances the system's adaptability to different billet sizes and improves the overall reliability and precision of the extrusion printing process.

When working with materials that transition from solid to semi-solid states at higher temperatures, the sealing mechanism can adjust to the expansion of materials and the chamber, maintaining a tight seal to prevent material leakage during extrusion.

Optionally, the sealing unit comprises an actively actuated sealing mechanism, configured such that during extrusion, the piston progresses downward unsealed until it contacts the compressed block of material, allowing air above the compressed block to escape freely; wherein upon contact, the sealing mechanism is actuated to create a seal.

This can effectively prevent the formation of an air cushion above the compressed block and enhancing the system's adaptability to different compressed block sizes, improving reliability and precision of the extrusion printing process.

Optionally, the sealing mechanism is configured to perform sealing by means of at least one of fluid pressure actuation, hydraulic actuation, mechanical actuation or electro-mechanical actuation.

In some examples, fluid pressure (hydraulic or pneumatic) may be utilized to expand a sealing element, such as an O-ring. This method can quickly respond to control signals, adjusting the pressure to expand or contract the seal as needed. The rapid responsiveness is advantageous for processes that cycle between different pressure and temperature conditions.

In some examples, an electro-mechanical actuation is provided that is configured to employ electrical actuators to physically move sealing components into place. This type provides precise control over the position and force of the seal, making it ideal for high-precision applications where slight variations in seal engagement can affect product quality.

In some examples, a mechanical actuation is provided that can involve mechanical components like springs, levers, or screws to adjust the seal.

In some examples, sealing mechanisms can be integrated with sensors that monitor parameters such as chamber pressure, temperature, and material consistency. Feedback from these sensors can trigger adjustments in the sealing force or position to compensate for changes, ensuring consistent material handling.

Optionally, fluid pressure is applied through a central channel in the piston housing the sealing unit, wherein the sealing unit is configured such that when the pressure is introduced, it forces a sealing element, to expand to achieve sealing, wherein preferably the sealing element is an O-ring.

In some examples, the sealing mechanism operates by fluid pressure that forces an O-ring to expand, creating a seal. This provides a reliable and adjustable sealing force that can be finely controlled by varying the fluid pressure. This precision allows for an effective seal that can be dynamically adjusted to the specific needs of the material being extruded, ensuring that the extrusion process is both effective and efficient, with minimal material leakage.

The sealing mechanism may comprise an O-ring made of a flexible, durable material such as nitrile rubber or silicone, which is seated in a groove within the piston or the chamber wall. The fluid, either gas or a hydraulic fluid, is introduced into a channel that leads to the backside of the O-ring. As the pressure increases, the fluid pushes against the O-ring, forcing it to expand outward and press against the chamber walls, creating a seal. The pressure of the fluid can be controlled via a valve system that is connected to a pressure source. This valve system can be manually operated or automated based on feedback from pressure sensors embedded within the chamber. The ability to adjust fluid pressure allows the system to respond dynamically to varying needs, such as changes in temperature, material viscosity, or operational speed, which can affect the sealing requirements.

The ability to finely tune the pressure allows for precise control over the expansion of the O-ring, ensuring that the seal is neither too tight (causing excessive wear or deformation of the O-ring) nor too loose (allowing material leaks). The system can quickly adjust to changes in operational conditions, providing a consistent seal quality throughout the printing process, even as the material properties change when heated to extrusion temperatures.

Optionally, compression occurs below the melting temperature or the glass transition temperature of at least a subset of components of the powder formulation, and wherein the compressed block of material is extruded at an elevated temperature at which said block of material becomes semi-solid.

The entrapment of air within the material during compression can thus be effectively avoided, which can degrade product quality. By compressing at lower temperatures and extruding at higher ones, the method ensures that the material properties are optimally managed throughout the process, leading to high-quality, uniform extrusion with enhanced structural integrity.

Air trapped within the material during the melting phase can create voids and inconsistencies in the final product. Post-compression, the temperature can be increased to bring the material to a semi-solid state. This transition facilitates the extrusion process as the material becomes malleable enough to be pushed through an extrusion nozzle without breaking apart. By controlling the temperature to just enough to soften the material, the flow through the nozzle can be precisely controlled, ensuring uniformity in the extruded product.

By avoiding the entrapment of air and controlling the phase of the material, the method ensures products are dense, structurally sound, and free of defects like porosity and uneven layering.

This dual-temperature approach in the compression and extrusion phases, not only enhances the quality and integrity of the printed objects but also provides a robust, efficient, and adaptable method.

According to an aspect, the invention relates to a system for extrusion printing, comprising: a chamber arranged to receive a powder formulation consisting of one or more components; a piston arranged with an outer diameter smaller than the inner diameter of the chamber to establish a gap, wherein the gap is configured to permit air to escape while preventing material from exiting during compression; a compression unit configured to compress the powder formulation within the chamber using the piston to form a compressed block of material; and a nozzle head through which the compressed block of material is configured to be extruded to facilitate extrusion printing.

The compaction effects are managed during the pressing stage to ensure consistent density and uniformity across the compacted mass of powder mixture (cf. billet). This is important as it enables the dosing of the material to be controlled with precise volumetric accuracy, a key advantage when transitioning to the extrusion phase. By doing so, the invention adeptly merges the benefits of direct powder extrusion, where the material is directly utilized in a powdered form for extrusion, simplifying the process and reducing waste, with the precision of piston-based printing systems. These piston systems are highly accurate in their delivery, ensuring that each segment of the extruded material is consistent with the next. This hybrid approach not only optimizes material usage by ensuring minimal variance in the amount of material extruded per given command but also enhances the reliability and repeatability of the printing process, which are critical factors in applications demanding high precision such as in pharmaceuticals and specialized manufacturing.

During the compression phase of the extrusion printing process, it can be ensured that air can escape through the specifically designed gap between the piston and the chamber walls. This gap prevents material creep while allowing for the evacuation of air, thereby avoiding the formation of air pockets within the compressed billet. Simultaneously, it can be important that the temperature of the material remains well below its softening point during compression. The gap through which air was previously allowed to escape can now be sealed during extrusion to prevent any of the semi-solid material from leaking out, ensuring that all the material is directed towards the nozzle for precise deposition. Furthermore, the material's temperature can be elevated above its softening point to facilitate the extrusion process. This increase in temperature reduces the viscosity of the material, allowing it to flow easily through the extruder nozzle while maintaining the shape and integrity of the extruded product upon deposition. These controlled adjustments in gap sealing and temperature modulation may be important for transitioning from effective compression to efficient extrusion, highlighting the intricate balance of conditions required to achieve optimal results in semi-solid extrusion printing.

Certain materials allow for cold extrusion, where the extrusion process is performed without heating the material above its softening point. This method may require the application of higher forces due to the material's increased resistance at lower temperatures. However, cold extrusion can be particularly advantageous for processing very heat-sensitive materials that might degrade or lose their functional properties when exposed to elevated temperatures. By enabling extrusion without the need for thermal softening, this approach expands the versatility of the extrusion printing method, making it suitable for materials such as specific pharmaceuticals, biological substances, or specialized polymers that cannot tolerate heat.

A "cold compression" may be utilized to fabricate a continuous, air-free billet from a granular (powder) material mixture. This approach diverges significantly from traditional cold extrusion techniques where materials are extruded at room temperatures. In the method according to the disclosure, although the billet can be formed under cold conditions to ensure air is not trapped within, it can be subsequently extruded at elevated temperatures. This heating may be utilized to alter the state of the billet to a semi-solid form, facilitating extrusion with precise control over the material flow, tailored to the demands of 3D-printing applications. Unlike direct powder extrusion methods, which typically rely on the dynamic behavior of the powder under heat and pressure that can vary significantly, the system of the disclosure can employ a strictly volumetric approach. This ensures consistent material deposition irrespective of external variables such as powder compaction, temperature fluctuations, or viscosity changes. Advantageously, the capabilities and accuracy of 3D-printing technology can be enhanced in an effective way.

It will be appreciated that any of the aspects, features and options described in view of the method apply equally to the system and the described device. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustrations. It is noted that the figures are only schematic representations of embodiments of the invention that are given by way of non-limiting example.

In the drawing:
Fig. 1 shows a schematic diagram of an embodiment of a system;
Fig. 2 shows a schematic diagram of an embodiment of a system;
Fig. 3 shows a schematic diagram of an embodiment of a system;
Fig. 4a, 4b show a schematic diagram of an embodiment of a system;
Fig. 5 shows a schematic diagram of an embodiment of a system;
Fig. 6 shows a schematic diagram of an embodiment of a system; and
Fig. 7 shows a schematic diagram of a method.

### DETAILED DESCRIPTION

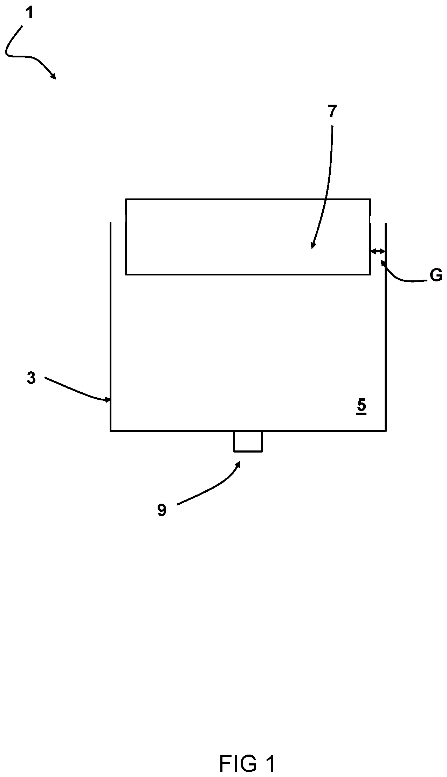

Fig. 1 shows a schematic diagram of an embodiment of a system 1 for extrusion printing. The system 1 includes a chamber 3 arranged to receive a powder formulation consisting of one or more components in an interior space 5 of said chamber 3. A piston 7 is arranged with an outer diameter smaller than the inner diameter of the chamber 3 to establish a gap G, wherein the gap G is configured to permit air to escape while preventing material from exiting during compression. The system 1 further includes a compression unit configured to compress the powder formulation within the chamber 3 using the piston 7 to form a compressed block of material. The system 1 further comprises a nozzle head 9 through which the compressed block of material is configured to be extruded to facilitate extrusion printing.

In some examples, the system 1 includes an extrusion mechanism. The extrusion mechanism may for instance employ a piston to put pressure on the material within the chamber 3.

This extrusion mechanism may operate by applying pressure via a piston which can be the same piston 7 used for compression or a distinct piston specifically adapted for the extrusion process. The use of the same piston simplifies the mechanical design and reduces the number of moving parts. Alternatively, employing a separate piston for extrusion allows for specialized configurations that may optimize the extrusion process, such as pistons with different dimensions or equipped with sealing units or the like that ensure different sealing conditions during extrusion.

It will be appreciated that in the illustrative example shown in fig. 1, the size of gap G is exaggerated.

For example for a pharmaceutical application, an initial step in the process may involve the preparation of a dry, homogenous powder mixture comprising an excipient and an active pharmaceutical ingredient in precise ratios. This mixture is carefully weighed to match the exact quantity needed for the production run, minimizing material wastage. The mixture is then compressed into a billet, ensuring all air is expelled and the ingredients are uniformly distributed throughout the billet. This step can be important as it ensures the billet is free of air pockets, which are detrimental to the quality of the pharmaceutical product.

The chamber 3 can be configured to withstand high pressures important for compressing material into a billet. This chamber may be engineered to endure the substantial forces exerted during the compression phase, typically up to 20 kiloNewton (kN). The piston employed is slightly smaller in outer diameter compared to the inner diameter of the chamber, creating a calibrated gap for example 30-70 microns wide, such as for instance approximately 50 micrometers wide. This narrow gap plays an important role in the compression process by allowing air to escape from between the granules of the powder mixture while preventing the material itself from bypassing the piston. This configuration ensures that air is expelled efficiently without the loss of material, which is particularly important in maintaining the integrity of the billet.

The process may operate well below the melting or glass transition temperatures of the components within the mixture, typically maintaining a temperature at least about 5 degrees Celsius below these important thresholds. Such temperature control may be important to prevent the entrapment of air within the material, which can occur if the material were to become too runny, compromising the quality of the extruded product. The majority component of the mixture, often the one with the lowest melting point, significantly influences the behavior of the mix and is, therefore, an important parameter in the formulation.

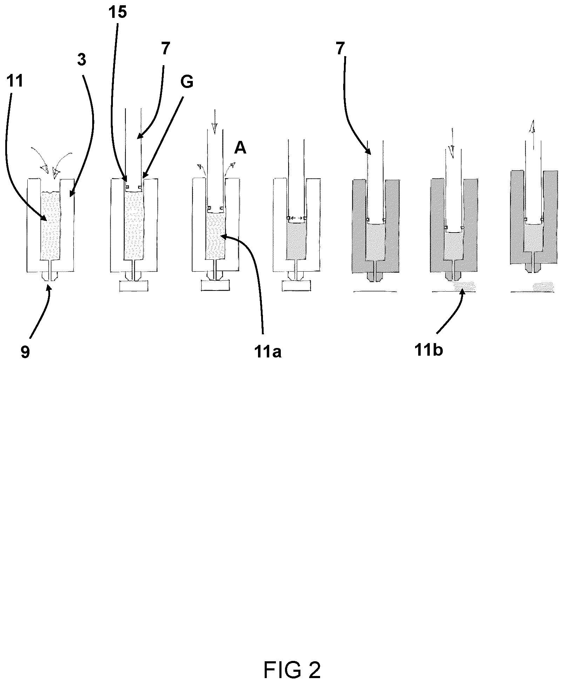

Fig. 2 shows a schematic of an extrusion printing system 1 comprising a chamber 3 for a powder formulation 11, a piston 7 with a smaller outer diameter than the chamber's inner diameter creating a gap G that allows air A escape but prevents material loss during compression, and a nozzle head 9 for extruding the compressed material 11b.

In certain examples, the chamber utilized in the system 1 may be configured as a syringe chamber 3. This syringe chamber embodiment employs a cylindrical body, similar to that of a syringe, wherein the powder formulation 11 is loaded. In this example, the interior space 5 of this syringe chamber 3 is precisely dimensioned to accommodate both the loading of the powder formulation and the subsequent compression and extrusion processes. The syringe chamber 3 design enables a highly controlled delivery of the powder formulation through a piston 7 mechanism that can act both as a compressor and an extruder. A same or different piston 7 may be used. In the shown example of fig. 2, the same piston 7 is employed for both compression and extrusion.

The chamber 3 may be configured to cooperate with a piston 7 with an outer diameter slightly smaller than the inner diameter of the chamber, establishing a gap G that permits the escape of air A while preventing the escape of material 11a during compression. This gap G may be configured to maintain the integrity of the compressed material prior to extrusion. The (syringe) chamber 3 further features a nozzle at one end, which functions as the outlet for the extruded material, facilitating precise deposition of the material in a controlled and directed manner.

The use of a syringe chamber 3 also allows for easy scalability and modularity in the design of the extrusion printing system 1. Different sizes and configurations of syringe chambers 3 can be interchanged to accommodate varying volumes of powder formulation or to achieve different extrusion characteristics, such as extrusion speed or material density. Additionally, the syringe chamber 3 can be fabricated from materials that are compatible with a wide range of chemical formulations. This configuration not only improves the utility of the extrusion printing system 1 but also can enhance its operational efficiency by streamlining the material handling and extrusion processes.

In the first process step, the components in the desired formulation may be weighed and subsequently mixed so as to create a uniform powder mix. Different methods exist for this, such as a tumbler or even mortar and pestle.

Once weighed, the components can be mixed to achieve a homogeneous blend. The mixing can be done using various methods, each suitable for different scales of production or specific requirements of the material formulation. For example, tumbler mixing may involves placing the powder components in a revolving tumbler. The rotation facilitates the tumbling action that gently but effectively mixes the powders. This method is beneficial for mixing large batches and can achieve a uniform blend without exerting excessive shear force, which might alter the characteristics of sensitive powders. Additionally or alternatively, a mortar and pestle may be used for example for smaller batches or when a delicate touch is needed. This approach allows for careful control of the mixing intensity and is especially useful for grinding components together to reduce particle size simultaneously, enhancing the uniformity of the mix.

One of the advantages of this process step, is that it does not require any special environmental conditions, such as controlled temperature or humidity. This simplicity facilitates the mixing process and makes it accessible without the need for advanced equipment or environments.

The uniformity of the powder mix may be important to ensure consistent behavior of the material under compression and during heating to a semi-solid state for extrusion. A uniform mix may guarantee that all parts of the billet will exhibit the same properties, leading to a more predictable and stable extrusion process.

The syringe chamber 3 may be designed with substantial structural integrity, characterized by thick walls. The term "thick-walled" as used herein refers to a wall thickness that is greater than that found in standard syringe chambers used for similar purposes. This enhanced thickness can serve multiple functional purposes. During the compression and extrusion processes, the chamber must withstand significant forces. The increased wall thickness ensures that syringe chamber 3 can resist the mechanical stresses imparted by the piston during compression and extrusion, thereby preventing deformation or failure of the chamber.

In a subsequent step, the homogeneous powder mixture, is transferred into a designated chamber within a compression chamber apparatus. The chamber 3 is sealed at its distal end subsequent to the introduction of the powder mix, thereby confining the material within a defined space.

A piston, which is characteristically configured with an outer diameter marginally smaller than the inner diameter of the syringe chamber, is employed to apply a compressive force onto the contained powder mix. The differential in diameters between the piston and the syringe chamber facilitates a narrow gap, designed to allow the escape of air entrapped within the powder mix during the compression phase, while concurrently preventing the leakage of the material itself past the periphery of the piston.

The application of a substantial compressive force, which may reach up to 20 kilonewtons (kN), results in the densification of the powder mix into a consolidated form, commonly referred to as a 'billet'. The creation of the billet is an important step in the process, as it establishes the foundational structure from which the final extruded product is formed.

It may be important to conduct this compression at a temperature significantly below the melting points or glass transition temperatures of any components within the powder mix. This precaution ensures that the air within the mix is expelled rather than becoming entrapped within the material as it may under higher temperature conditions where the material's viscosity would prevent such expulsion. The process of compression may be designed to be thermally efficient, reducing heat generation which could inadvertently alter the temperature profile of the powder mix during this stage.

Subsequently, the billet, now formed and residing within the chamber 3, is prepared for the extrusion process. Initially, an integral seal 15 within the piston 7 is activated. This seal 15, which may be constructed from materials such as rubber or silicone and typically takes the form of an O-ring, may be configured to expand and contract dynamically. During the compression phase, the seal is retracted or maintained in a minimal state to allow for air expulsion. At this point in the process, the seal is engaged or expanded to close off the gap G previously allowing air escape. This transition is crucial to prevent the semi-solid material, now to be heated and softened, from leaking past the piston during the subsequent extrusion phase.

Following the engagement of the seal, the billet within the syringe chamber can be heated to a specified process temperature. This temperature can be carefully chosen based on the properties of the material, typically just below its melting point or within a semi-solid temperature range, to facilitate easy extrusion while maintaining the material's integrity. The heating is precisely controlled to ensure uniform temperature distribution throughout the billet, preparing it for smooth and consistent extrusion through the nozzle.

Concurrently with and/or subsequent to the heating phase, the bottom of the syringe chamber is manipulated to open directly to a nozzle outlet. This step marks the transition from the preparatory phases of billet formation and heating to the active phase of extrusion printing. The opening mechanism may involve retracting a barrier or activating a valve that separates the syringe chamber from the nozzle, thereby allowing the now-heated and malleable billet to be directed towards the extrusion outlet.

Once the nozzle outlet is opened, and the billet is heated to the appropriate temperature with the seal engaged, the system is rendered ready for the extrusion printing process. The controlled environment within the chamber, now sealed and heated, ensures that the material is extruded with high fidelity to the desired dimensions and shapes dictated by the printing design. This systematic approach ensures minimal material waste and high-quality output.

This invention can streamline the traditional multi-stage process by integrating all necessary steps into a single apparatus, thereby reducing equipment needs, simplifying the production process, and minimizing potential waste. This integrated approach not only enhances efficiency but also improves the quality and consistency of the final product, making it an ideal solution for e.g. pharmaceutical manufacturing where precision and reliability are important.

In Fig. 2, an overview of a sequence of operations for the extrusion printing process is graphically depicted, illustrating the transformation of the powder mix into a printed object through a series of controlled steps. Initially, the powder is poured into the syringe chamber, a step where the raw material is introduced into the system. Following the deposition of the powder, the nozzle at the base of the syringe chamber is closed off, securing the powder within the apparatus and preparing it for the subsequent compression. This step involves the application of a downward force on the powder by a piston 7, which compresses the powder into a dense billet while allowing any trapped air to escape through the small gap G between the piston and the chamber walls. Once the billet is formed, the next step may involve engaging a seal 15 within the piston 7. This seal is activated to close off the gap G, ensuring that no material escapes and that the billet maintains its integrity during the heating phase. The nozzle is then reopened, and the syringe chamber is heated to bring the billet to the appropriate temperature for extrusion. With the conditions set, the billet is extruded through the nozzle, forming the desired object. The final step in the process involves retracting the piston, which pulls back any excess material and helps in maintaining the precision of the print by preventing drips or stringing, thus completing the cycle from raw powder to finished product. Each phase in this example is orchestrated to maintain the quality and consistency of the printed object.

The billet formation process may necessitate a gap within the system architecture that allows for the escape of air from the material. Given that the material used in this process is typically at a cold temperature and exhibits high viscosity, a substantial force, measured in kilonewtons, is required to effectively compress the material into a billet. This need for high force ensures that the material is densely compacted, eliminating air pockets that can compromise the integrity and quality of the final product. In some examples where the billet is used for extrusion, it can be important to ensure that the system is sealed after the billet is formed to prevent material from escaping during the pressing process under elevated temperatures. This sealing process is dynamically controlled; it can be disengaged to allow for the expulsion of air during the initial compression and subsequently engaged to ensure sealed conditions during extrusion. This feature can be important for maintaining the purity and consistency of the material as any entrapped air can lead to defects in the final printed product.

Furthermore, the invention provides a method for introducing billets into an extrusion apparatus where the billets are specifically sized to be slightly smaller than the container to facilitate easy insertion without creating air gaps. The sealing mechanism can be toggled to allow the escape of air during initial billet formation and then activated to seal the system for extrusion. This toggle feature is advantageous as it permits the system to be operated at both cold and elevated temperatures, catering to different material properties and process requirements.

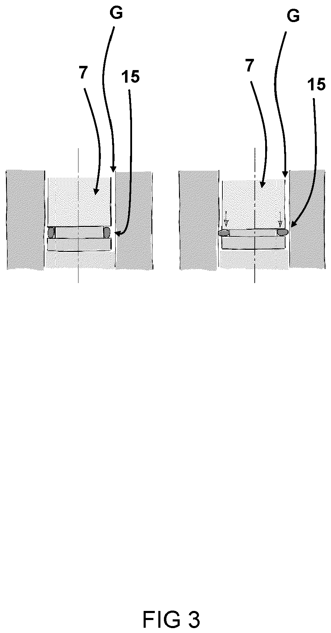

Fig. 3 shows a schematic diagram of an embodiment of a part of a system 1. In this example, a piston 7 with a sealing mechanism is provided. Various sealing mechanisms may be employed. In this illustration, an O-ring seal 15 is employed, which can be engaged either passively or actively prior to the initiation of printing. The necessity for this sealing action can arise from the structural design wherein a deliberate gap G is maintained between the piston and the syringe chamber during the billet pressing phase to facilitate the escape of air. However, once the billet formation is complete and the printing phase is about to commence, it may become important to seal this gap. The sealing serves a dual purpose: firstly, it prevents the semi-solid formulation from being extruded inadvertently through the gap G under the pressure exerted during printing, thereby ensuring that the material is directed exclusively towards the nozzle for precise deposition. Secondly, the seal enables an effective retraction mechanism during the printing process. This retraction is crucial as it allows the piston to slightly withdraw, reducing the pressure and sucking any excess material back into the nozzle, thus preventing unwanted dribbling of material and ensuring clean stop-start transitions between print segments. The sealing action can be effectuated by introducing air pressure through a central channel in the piston, which when actuated, expands the O-ring or similar sealing element to close off the gap, transitioning from a state where the gap is clear (allowing for air escape during compression) to one where the gap is completely sealed, facilitating precise and controlled extrusion during the printing phase.

On the left side in fig. 3, the seal is not actuated, leaving the gap between the piston and the chamber wall clear. This configuration is important during the initial billet pressing stage to allow air trapped within the powder mixture to escape, thereby preventing the formation of air pockets which could compromise the integrity of the billet. On the right side in fig. 3, the seal is actively actuated, resulting in the gap being completely sealed. This transition can be important for the printing phase, as sealing the gap prevents the semi-solid formulation from being pushed out through the gap under the forces of extrusion. Moreover, the sealed state enables effective retraction of the piston during printing interruptions, allowing the material to be drawn back into the nozzle, thus preventing unwanted material flow and ensuring precise deposition.

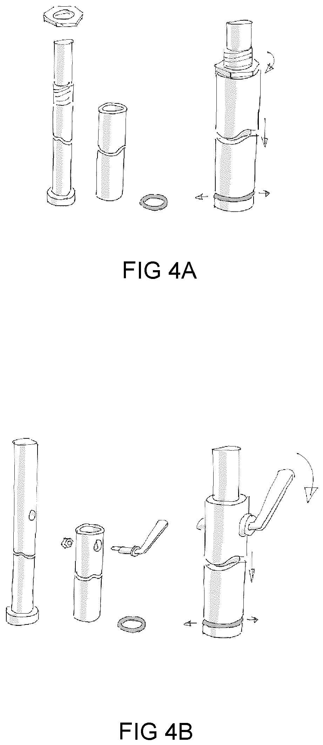

Fig. 4a, 4b show a schematic diagram of an embodiment of a system 1. In these examples, actuating the seal 15 involves mechanical means, which can be implemented in various configurations as exemplified in the provided illustrations. In one depicted solution as shown in fig. 4a, a bushing component is positioned over the piston 7. The downward movement of this bushing is facilitated by the tightening of a nut, which exerts a compressive force on an O-ring situated between the bushing and the piston 7. This action causes the O-ring to deform outwardly, thereby expanding to fill the gap G between the piston 7 and the wall of chamber 3, effectively sealing it. An alternative mechanical actuation mechanism as shown in fig. 4b, employs an eccentric actuator, which achieves the same sealing effect. This actuator, through its off-center rotation, imparts a lateral force on the O-ring or a similar sealing element, causing it to expand outward and seal the gap. Both methods harness mechanical forces to manipulate the position and shape of a sealing element, ensuring a tight seal that prevents material leakage during the extrusion process while allowing for precise control over the sealing dynamics.

In some examples, the sealing mechanism within the piston may be active. Passive seals may be less reliable at elevated temperatures and may expand in an unpredictable way. While passive systems may find utility in mass production settings where sealing requirements are minimal, active sealing mechanisms may be preferred in some cases for their reliability and control. Active seals can be adjusted mechanically or via pressure-driven means, with a mechanical adjustment being favored to avoid the complexities of integrating electromechanical or pneumatic systems into the syringe head.

In some examples, it may be important to incorporate a mechanism that permits effective retractive action during the printing process. This retractive action can be important for ensuring that material does not inadvertently continue to flow or extrude during the cessation phases of the printing cycle. Typically in 3D printing, the printhead undergoes start-stop movements, and it is during these pauses that any unintended extrusion can lead to contamination or defects in the printed object.

To mitigate this risk, the disclosed system may include a design where, upon pausing the extrusion process, the piston within the printing apparatus is slightly retracted. This retraction reduces the pressure in the extrusion system, effectively minimizing the risk of unwanted material flow. However, the functionality of this retraction mechanism is heavily reliant on the presence of a seal at the upper portion of the piston or within the printing chamber.

The necessity for such a seal arises because, without it, it would not be feasible to create a vacuum or negative pressure environment needed to counteract the residual pressure that tends to push the material out. The seal ensures that when the piston retracts, the system's internal pressure is sufficiently altered to prevent any oozing or dripping of the material from the nozzle, thus maintaining the cleanliness and integrity of the printed structure. This sealing mechanism can be important for maintaining precise control over the material flow, particularly when handling viscous or semi-solid materials that are prone to such behavior.

Overall, the integration of a sealing system to facilitate the retractive action of the piston represents a significant improvement over traditional 3D printing setups. It enhances the printer's ability to handle a variety of materials by providing a more controlled and clean printing process, thereby reducing material waste and increasing the quality of the final product.

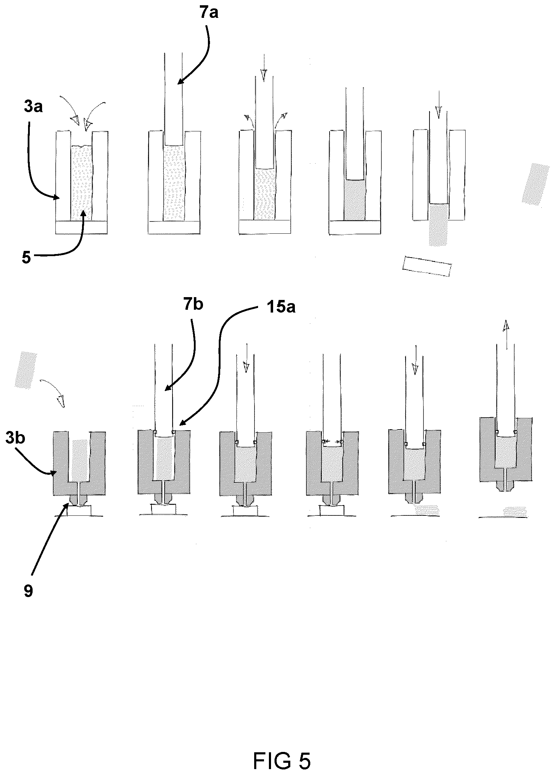

Fig. 5 shows a schematic diagram of an embodiment of a system 1. In this example, the billet formation and the extrusion printing processes are distinctly separated to improve the compliance with the specific requirements and mechanical forces involved in each step. Initially, the billet is created within a cold (syringe) chamber 3a, which is maintained e.g. at room temperature and features a closed bottom to contain the material. In this setup, the piston 7a used lacks an O-ring, allowing for a small air gap that facilitates the escape of air during compression but prevents the powdered material from bypassing the piston 7a. After compression, the bottom of the chamber 3a is opened, and the solid billet is extruded gently, and then either stored for later use or immediately moved to the printing setup. For the printing process, the billet is transferred to a different (syringe) chamber 3b that is preheated to the optimal temperature for extrusion. This chamber 3b is equipped with a piston 7b that includes an O-ring 15a to ensure a tight seal, preventing material leakage during the printing phase. Other types of sealing arrangements may also be used. The diameters of both the pressing and printing chambers are precisely matched so that the billet can transition smoothly from one to the other without creating an air film, which could compromise print quality. Additionally, the length of the compressed billet is chosen to allow the O-ring 15a to effectively seal the chamber without trapping air above the billet, ensuring consistent material flow during printing.

This bifurcation of the process allows for the use of a high force, often several kilonewtons, for billet compression using cost-effective and robust equipment like a hydraulic press, while enabling a more refined and lower force, typically less than 200 newtons, for the more delicate printing phase. This separation not only increases the efficiency of each step but also allows for greater flexibility in the handling and use of billets, aligning with operational and economic efficiencies.

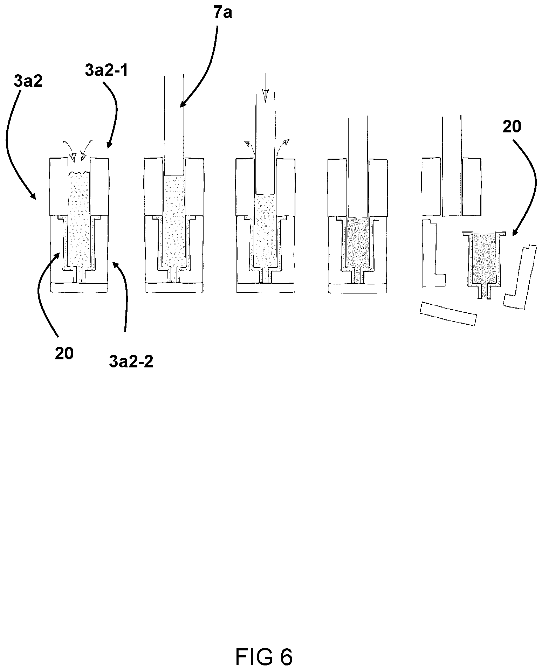

Fig. 6 shows a schematic diagram of an embodiment of a system 1. In this example, a dual-chamber configuration is employed, wherein the second chamber is still used for dedicated extrusion, but the first chamber 3a2 is used in a slightly different manner. Instead of making bare billets, the billets are created directly in a separate container 20. The container 20 may have various forms and configurations.

In some examples, it has a syringe or cartridge configuration. In some examples, these containers 20 are considered disposable and made e.g. of plastic, but the use of reusable containers, made e.g. of metal is also an option.

The first chamber 3a2 may include an upper part 3a2-1 and a lower part 3a2-2. The lower part 3a2-1 is arranged such that it creates a cavity that allows for a tight fit for the container 20 and with a closed container outlet at the bottom. The lower part 3a2-2 may have multiple parts that can be locked together to facilitate removal of the container after filling. In addition, both the upper 3a2-1 and the bottom part 3a2-2 of the chamber 3a2 are designed to withstand pressures that are required for the air-free compression of powders. After inserting the container into the lower part 3a2-2 of the chamber 3a2, the upper part 3a2-1 is locked to the bottom part 3a2-2. The inner diameter of the upper part 3a2-1 can be substantially equal to the inner diameter of the container 20. This allows for an amount of powder to be put in the chamber, such that after the compression step, the container 20 gets completely filled. This approach has two advantages over the pressing of bare billets. Firstly, containers 20 can be prepared in advance, i.e. without the need for immediate use, and can be easily capped on both sides to allow for a prolonged shelf life. Secondly, the container 20 will now be completely filled with air-free compressed material. The latter is in contrast with the use of bare billets in the second chamber where you need to allow for an, albeit small, air gap to make sure the billet can be inserted into the container. This air film may interfere with proper extrusion.

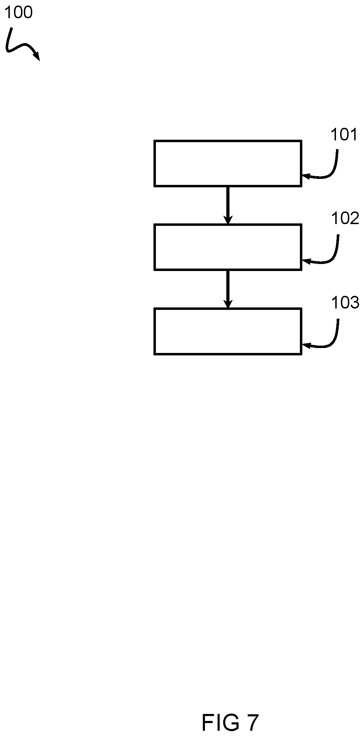

Fig. 7 shows a schematic diagram of a method 100 for extrusion printing. In a first step 101, a powder formulation consisting of one or more components is provided into a chamber equipped with a piston. In a second step 102, the powder formulation is compressed within the chamber using the piston to form a compressed block of material, wherein the piston is configured with an outer diameter smaller than the inner diameter of the chamber, such as to establish a gap that is configured to permit air to escape while preventing the material from exiting therethrough during compression. In a third step 103, the compressed block of material is extruded through a nozzle to achieve extrusion printing.

By integrating a system that directly compresses a uniform, air-free stock formulation into a (syringe) chamber, the invention eliminates the need for costly specialty equipment such as Speedmixers, vacuum pumps, and heating/stirring baths. This streamlined process not only reduces the overall equipment expenses but also simplifies the operational steps, thereby saving time and minimizing the handling requirements. Moreover, the method allows for the use of smaller volumes of material without compromising the quality of the mix, which can be important for maintaining consistency in the printed products. The design of the system can ensure that the final formulation is transferred directly into the chamber without the need for intermediate containers, significantly reducing material waste and the associated cleaning tasks. Consequently, this approach not only simplifies the production process but also enhances the environmental sustainability of the manufacturing operations by reducing waste and resource usage.

It will be appreciated that a "billet" may refer to a pre-formed, compacted mass of powder mixture that has been compressed and shaped within a chamber using a piston. This billet can serve as the foundational form from which the material is extruded during the printing process.

It will be appreciated that the billet may be created by applying a controlled force to the powder inside a chamber (e.g. syringe chamber), ensuring that air is expelled through a narrow gap between the piston and the chamber walls while preventing the material from escaping. The process may be conducted at a temperature below the melting points of the components in the mix to maintain the integrity of the powder and avoid any air entrapment. The resulting billet is dense and uniform, crucial for ensuring consistent quality and behavior during the subsequent extrusion and printing stages.

It will be appreciated that the term 'semi-solid extrusion' may refer to a specialized process in which a material is gently heated until it reaches a state that is intermediate between solid and liquid, commonly described as paste-like or semi-solid. This state can enable the material to flow under pressure but also to solidify quickly upon deposition, maintaining the desired shape and structure. In the context of this technology, it is noted that a mixture of powder combined with a small amount of liquid to form a paste-like substance are also be considered under the umbrella of semi-solid extrusion techniques.

It will be appreciated that the term "one-stop solution" may refer to a process whereby a precise number of objects (e.g. pills) can be printed with minimal to no waste. This method entails the exact weighing of the required amount of material, which is then loaded into the device, allowing the entire production process to occur within a single machine. This integrated approach contrasts sharply with conventional processes in which materials must be prepared across multiple machines or stages before printing can commence. Such traditional methods often lead to material losses at various stages of transfer and preparation. By centralizing all steps, from material preparation through to printing, within one apparatus, this solution not only streamlines the manufacturing workflow but also significantly reduces the potential for waste. This efficiency is particularly important in industries like pharmaceuticals, where precision and cost-efficiency are highly desired. This all-encompassing setup ensures that exactly the right amount of material is used for each batch of objects (e.g. pills), aligning with increasing demands for sustainable and efficient production practices.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A method for extrusion printing, comprising:
providing a powder formulation consisting of one or more components into a chamber equipped with a piston;
compressing the powder formulation within the chamber using the piston to form a compressed block of material, wherein the piston is configured with an outer diameter smaller than the inner diameter of the chamber, such as to establish a gap that is configured to permit air to escape while preventing the material from exiting therethrough during compression;
extruding the compressed block of material through a nozzle to achieve extrusion printing.

2. The method of claim 1, wherein the process of compressing the powder formulation into a compressed block of material and subsequent extrusion through the nozzle is performed using a same chamber.

3. The method of claim 2, wherein a sealing is added, by means of a sealing unit, wherein the sealing unit is arranged to eliminate the gap through which air is allowed to escape during compression.

4. The method of claim 3, wherein the sealing unit is switchable between a first position, in which air is allowed to escape, and a second position, in which a sealing is obtained within the chamber, wherein the sealing unit is configured to be switched to the first position during at least a portion of the compression of the powder formulation, and to be switched to the second position during at least a portion of the extrusion of the compressed block of material through the nozzle.

5. The method of any one of the preceding claims 1-4, wherein a same piston is used for compression and extrusion.

6. The method of claim 5 insofar also dependent on claim 3 or 4, wherein the sealing unit is integrated within said same piston.

7. The method of any one of the preceding claims, wherein the chamber is integrated within an extrusion print head to allow immediate subsequent extrusion of the formed compressed block of material.

8. The method of claim 1, wherein the process of compressing the powder formulation into a compressed block of material and subsequent extrusion is done within a different chamber, wherein a first chamber is used during compression to form the compressed block of material, and wherein a second chamber receives said formed compressed block of material and is used for subsequent extrusion printing.

9. The method of claim 8, wherein a different piston is used for compression and extrusion, wherein during compression, a first piston is employed that is connected to a first actuation unit, and wherein during extrusion, a second piston is employed that is connected to a second actuation unit, different from the first actuation unit.

10. The method of claim 9, wherein only the second piston has a sealing unit configured to allow for sealed extrusion printing.

11. The method of any one of the preceding claims 3-7 or 10, wherein the sealing unit has an actively actuated sealing mechanism, wherein the sealing mechanism is configured to perform sealing by means of at least one of fluid pressure actuation, hydraulic actuation, mechanical actuation or electro-mechanical actuation.

12. The method of claim 11, wherein fluid pressure is applied through a central channel in the piston housing the sealing unit, wherein the sealing unit is configured such that when the pressure is introduced, it forces a sealing element, to expand to achieve sealing, wherein preferably the sealing element is an O-ring.

13. The method of any one of the preceding claims 8-12, wherein the compressed block of material is formed directly within a container inserted into the first chamber during compression.

14. The method of any one of the preceding claims, wherein compression occurs below the melting temperature or the glass transition temperature of at least a subset of components of the powder formulation, and wherein the compressed block of material is extruded at an elevated temperature at which said block of material becomes semi-solid.

15. A system for extrusion printing, comprising:
a chamber arranged to receive a powder formulation consisting of one or more components;
a piston arranged with an outer diameter smaller than the inner diameter of the chamber to establish a gap, wherein the gap is configured to permit air to escape while preventing material from exiting during compression;
a compression unit configured to compress the powder formulation within the chamber using the piston to form a compressed block of material; and
a nozzle head through which the compressed block of material is configured to be extruded to facilitate extrusion printing.
